# EUROPÄISCHE PATENTSCHRIFT

(11) **EP 2 505 709 B1**
(45) Veröffentlichungstag und Bekanntmachung des Hinweises auf die Patenterteilung: **08.05.2013**
(21) Anmeldenummer: 11401052.3
(22) Anmeldetag: 29.03.2011
(51) Int. Cl.: D06F 39/08, G01F 23/16

(54) **Sensorvorrichtung für eine Waschmaschine und Waschmaschine**
Sensor device for a washing machine and washing machine
Dispositif de détection pour un lave-linge et lave-linge

(43) Veröffentlichungstag der Anmeldung: 03.10.2012
(73) Patentinhaber: Miele & Cie. KG, 33332 Gütersloh (DE)
(72) Erfinder: Finke, Michael, 33161, Hövelhof (DE)

(56) Entgegenhaltungen:
- EP-A2- 2 009 408
- DE-A1-102008 022 465
- DE-B3-102004 057 942

## Beschreibung

Die Erfindung betrifft eine Sensorvorrichtung, umfassend
- ein Gehäuse,
- einen Drucksensor (20), der dazu eingerichtet ist, in Abhängigkeit des den Sensor (20) wirkenden Druckes eines zu messenden Mediums ein Sensorsignal zu erzeugen,
- einem Stutzen zur dichtenden Einbindung des Gehäuses in eine Öffnung in einer Behälterwand und
- einer elektrischen oder elektronischen Schaltungsanordnung zur Verstärkung oder Anpassung des Sensorsignals.

Zum Waschen von Wäsche in einer Trommelwaschmaschine wird die Wäsche in der drehenden Trommel bewegt, wodurch die Benetzung bzw. Durchfeuchtung der Wäsche mit der Waschflüssigkeit und der Waschmechanik bewirkt werden. Hierbei befindet sich Wasser im Laugenbehälter bzw. in der Trommel, wobei durch die Bewegung der Wäsche der Schmutz ausgespült wird. Nach den Wasch- und Spülphasen wird die Wäsche meistens durch eine Schleuderphase entwässert, in dem die Trommel mit einer Drehzahl gedreht wird, bei der die Wäsche am Trommelmantel anliegt und durch Zentrifugatwirkung das Wasser aus der Wäsche herausdringt. Zur Durchführung eines Waschzyklus werden einige physikalische Größen erfasst, die sich auf die Beschaffenheit und Menge der Waschflüssigkeit bzw. Lauge beziehen. So ist es bei herkömmlichen Waschmaschinen üblich, die Temperatur mit einem Sensor an der Laugenbehälterwand zu erfassen, wobei der Wasserpegel mit einem separat angeordneten Drucksensor erfasst wird. Ferner existieren Lösungen, bei denen zusätzlich Trübungssensoren zur Bestimmung des Verschmutzungsgrades der Lauge verwendet werden.

Aus der DE 10 2008 022 465 A1 ist eine Sensorvorrichtung zur Druckerfassung bekannt, die eine mit ihrem Gehäuse in der Behälteröffnung eingesetzt ist, damit die Membrane in direktem Kontakt mit der Flüssigkeit treten kann. Hierbei ist es nachteilig, dass Ablagerungen an der Membrane die Beweglichkeit einschränken, so dass nach einer gewissen Betriebsdauer die Genauigkeit nachlässt. Ferner können aggressive Substanzen der Waschflüssigkeit den Sensor oder Teile davon angreifen und zerstören.

Aus der DE 41 38 636 A1 oder EP 2 009 408 A2 ist es allgemein bekannt, anhand des Drucksignals eines Drucksensors die in den Laugenbehälter eingelassene Wassermenge zu erfassen. Anhand des zeitlichen Druckverlaufs wird der Wassereinlauf gesteuert. Hierbei wird eine sogenannte Luftfalle verwendet, in der abhängig vom Pegel ein Gasdruck entsteht, der über einen Schlauch einem Sensor zur Druckerfassung zugeführt wird. Diese Anordnung ist zwar zuverlässig, da der Sensor nicht mit der Lauge in Kontakt tritt, jedoch ist der Aufbau recht aufwändig und aufgrund der zahlreichen filigranen Bauteile recht montageunfreundlich.

Der Erfindung liegt deshalb die Aufgabe zu Grunde, eine zuverlässige und einfach zu montierende Sensorvorrichtung für eine Waschmaschine oder einen Waschtrockner bereitzustellen.

Die Aufgabe wird durch eine Sensorvorrichtung mit den Merkmalen des Anspruchs 1 und durch eine Waschmaschine mit den Merkmalen des Anspruchs 9 gelöst. Vorteilhafte Ausführungen ergeben sich aus den jeweils abhängigen Ansprüchen.

Der mit der Erfindung erreichte Vorteil besteht darin, dass mit einer einzigen Komponente mehrere Funktionen bereitgestellt werden können, sodass die Zuverlässigkeit und die Handhabung bei der Montage wesentlich vereinfacht wird. Die Fehleranfälligkeit wird ferner dadurch vermindert, dass kein Luftschlauch zu einer entfernt platzierten Membrane mit Sensor geführt werden muss.

Hierzu besitzt die Sensorvorrichtung in ihrem Gehäuse eine Druckkammer, in der der Drucksensor mit dem zu messenden Medium Wirkverbindung steht und ferner einer Röhre, die sich zum Behälterinneren erstreckt, wenn die Sensorvorrichtung in betriebsgemäßer Position in der Behälterwand eingesetzt ist und eine Luftfalle für den Drucksensor bereitstellt. Die elektrische oder elektronische Schaltungsanordnung, die auf einer Leiterplatte angeordnet ist, ist hierbei luftdicht von der Druckkammer getrennt.

In einer zweckmäßigen Ausführung umfasst der Drucksensor eine Membrane, die in Abhängigkeit des auf die Membrane wirkenden Druckes eines zu messenden Mediums eine Bewegung oder Positionsänderung der Membrane bewirkt, die mit einem Signalerzeuger zur Erzeugung eines Sensorsignals zusammenwirkt. Mit Hilfe der Membran können auch kleine Druckänderungen zuverlässig mit einem Kraftaufnehmer erfasst werden. Als Drucksensor können auch ein direkt mit der Druckammer in Verbindung stehender piezoelektrischer Sensor oder ein bewegliches oder ein elastischer Wandbereich mit einem Dehnungsmessstreifen verwendet werden.

In einer zweckmäßigen Weiterbildung verläuft die Röhre unter einer Schrägen in Richtung des Behälterbodens, wenn die Sensorvorrichtung in betriebsgemäßer Position in der Behälterwand eingesetzt ist. Damit wird ein optimaler Druckraum für die Bereitstellung der Luftfalle bereitgestellt.

In einer insgesamt zweckmäßigen Ausführung besitzt der Stutzen eine umlaufende Rippe, die zur Einbindung in einer umlaufenden Nut einer Dichtung am Öffnungsrand der Behälterwand ausgebildet ist. Hierdurch wird ein formschlüssiger Feststitz der Dichtung am Gehäusestutzen erreicht, wobei die Dichtung wiederrum formschlüssig mit einer Presspassung selbsthaltend in der Öffnung eingesetzt ist. Damit dient die Dichtung als Befestigungsmittel zum Befestigen der Sensorvorrichtung in der Laugenbehälterwand.

In einer vorteilhaften Ausführung weist die Röhre einen in etwa rechteckigen oder rechteckigen Querschnitt auf. Dadurch wird platzsparend das größtmögliche Volumen für die Luftfalle erreicht.

In einer weiteren, vorteilhaften Ausführung der Sensorvorrichtung ist der Stutzen in etwa zylinderförmig oder zylinderförmig. Die dauerhafte und zuverlässige Dichtwirkung um den umlaufenden Rand ist durch diese Formgebung besonders einfach sichergestellt.

In einer insgesamt vorteilhaften Weiterbildung sind innerhalb der Röhre Schottwände in etwa labyrinthartig angeordnet. Dadurch wird das Eindringen von Spritzwasser in den Druckraum für die Membrane verhindert, da kein direkter, gradliniger Weg zum Laugenbehälterinneren besteht.

In einer zweckmäßigen Weiterbildung sind die Schottwände an der Oberseite der Röhre angebunden und enden zur Unterseite der Röhre hin beabstandet. Dadurch wird zwar eine direkte Verbindung zum Laugenbehälterinneren geschaffen, Spritzer oder Tropfen bleiben jedoch an den sozusagen hängenden Schottwänden hängen und tropfen ab, bevor sie den Druckraum bzw. in den Bereich der Membrane erreichen.

In einer insgesamt vorteilhaften Ausführung umfasst die Sensorvorrichtung eine elektrische Anschlussvorichtung zum Anschluss einer Signalleitung, sodass die Vorrichtung an einen vorab verlegten Kabelbaum einfach angeschlossen werden kann.

In einer vorteilhaften Weiterbildung umfasst die Anschlussvorrichtung einen Steckverbinder, der als Teil des Gehäuses ausgebildet ist. Damit ist der Steckverbinder integraler Bestandteil der Sensorvorrichtung und braucht nicht separat gehandhabt werden. Die Kontaktstellen sind auf der Leiterplatte aufgedruckt oder aufgebracht, wobei der Bereich der Kontaktstellen aus dem Gehäuse ragt.

In einer insgesamt vorteilhaften Ausführung umfasst die Sensorvorrichtung ferner einen Temperatursensor, der am freien Ende der Röhre angebracht ist, der mit der elektronischen Schaltung oder der Anschlussvorrichtung mittels einer Leitung in der Röhre verbunden ist. Das Freie Ende befindet sich im eingebauten Zustand nah oberhalb des Heizkörpers für die Waschflüssigkeit, sodass eine zuverlässige Temperaturüberwachung bereitgestellt wird.

In einer weiteren, insgesamt vorteilhaften Ausführung umfasst die Sensorvorrichtung eine zum Behälterinneren zugewandten Wandung des Stutzens, in der weitere Sensoren zur Erfassung physikalischer oder chemischer Eigenschaften der Flüssigkeit im Laugenbehälter angebracht sind. Auf diese Wiese wird eine kompakte, multifunktionale Sensorvorrichtung für verschiedene physikalische Größen bereitgestellt. Die Weiteren Sensoren sind auf der Leiterplatte angebracht, sodass eine einfache und zuverlässige Anbindung über Leiterbahnen auf der Leiterplatte bereitgestellt wird.

In einer vorteilhaften Weiterbildung besteht hierbei zumindest ein weiterer Sensor aus einer Elektrode zur Erfassung des Leitwertes, PH-Wertes, der Oberflächenspannung oder des Sauerstoffgehalts der Flüssigkeit.

In einer weiteren, vorteilhaften Weiterbildung besteht zumindest ein weiterer Sensor aus einem Fototransistor oder einem lichtsensitiven elektronischen Bauteil, das im Zusammenspiel mit einer auf der Wandung angebrachten Lichtquelle einen Trübungssensor bereitstellt. Für alle Sensoren oder Lichtquellen sind jeweils Anschlussmittel vorgesehen, die außenseitig am Gehäuse kontaktiert werden können. In einer anderen Ausführung können die Sensorsignale mit einem Datenkabel zur Steuereinrichtung mit Hilfe eines Busprotokolls übertragen werden. Die elektronische Schaltung dient hierbei zur Konvertierung der einzelnen Sensorsignale in ein Datenformat zur seriellen Übertragung zur Steuereinrichtung der Waschmaschine.

Die Erfindung betrifft auch eine Waschmaschine mit einem Laugenbehälter zur Aufnahme von Waschflüssigkeit zum Behandeln von Wäsche, einer im Laugenbehälter horizontal drehbar gelagerte Trommel, einem Motor zum Drehen der Trommel, einem Heizkörper, einer Wasserzulaufeinrichtung, einem Heizkörper und einer Steuereinrichtung zum Steuern des Waschprozesses in Abhängigkeit eines ausgewählten Waschprogramms, einem Drucksensor zur Erfassung des Wasserpegels und Druckschwankungen im Laugenbehälter und einem Temperatursensor zur Erfassung der Wassertemperatur im Laugenbehälter, wobei der Drucksensor und der Temperartursensor und/oder weitere Sensoren als kompakte Sensorvorrichtung wie vorstehend beschrieben, die in einer stirnseitigen Behälterwand eingesetzt ist, ausgebildet ist, wobei die Sensorvorrichtung mittels einer oder mehreren elektrischen Leitungen mit der Steuereinrichtung verbunden ist.

In einer zweckmäßigen Ausführung umfasst die Waschmaschine eine Dichtung am Öffnungsrand der Behälterwand des Laugenbehälters, die eine umlaufende Nut aufweist zur Einbindung einer am Stutzen des Gehäuses der Sensorvorrichtung angeformten umlaufenden Rippe, wobei die Dichtung dazu ausgebildet ist, die Sensorvorrichtung in der Behälteröffnung zu fixieren.

Ein Ausführungsbeispiel der Erfindung ist in den Zeichnungen rein schematisch dargestellt und wird nachfolgend näher beschrieben. Es zeigen
- Fig. 1:: eine Waschmaschine in einer skizzierten Schnittdarstellung;
- Fig. 2:: die Sensorvorrichtung in einer geschnittenen Darstellung;
- Fig. 3:: die Röhre in einer skizzierten Detailansicht und
- Fig. 4:: die Sensorvorrichtung in einer perspektivischen Ansicht.

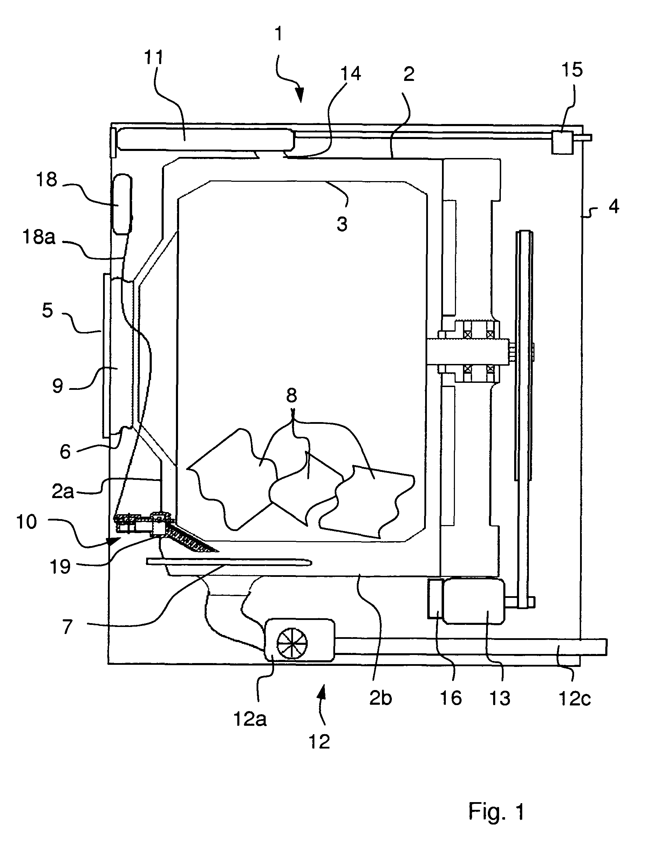

In Fig. 1 ist in rein schematischer Darstellung eine Waschmaschine 1, mit einem Laugenbehälter 2 dargestellt. Die Positions- und Richtungsangaben beziehen sich auf die betriebsgemäße Aufstellposition der Waschmaschine 1. Innerhalb des Laugenbehälters 2 ist eine drehbar gelagerte und über einen elektrischen Motor 13 angetriebene Trommel 3 angeordnet, die die im Laugenbehälter 2 befindlichen Wäschestücke 8 bewegt. Die Trommel 3 ist im vorliegenden Ausführungsbeispiel aus Edelstahl hergestellt und mit einer Vielzahl an Öffnungen für die Durchflutung versehen. Das Gehäuse 4 hat eine Beladungsöffnung 9, über die das Innere der Trommel 3 durch die Dichtungsmanschette 6 hindurch erreichbar ist. Die Beladungsöffnung 9 ist mittels einer Tür 5 verschließbar. Im unteren Bereich des Laugenbehälters 2 ist ein Heizkörper 7 angeordnet, der die Waschflüssigkeit im Laugenbehälter 2 erhitzen kann. Im oberen Bereich der Maschine 1 ist ein Einlassventil 15 skizziert, welches das Einlaufen des Wassers aus dem Versorgungsnetz bereitstellt. Über den Einspülkasten 11 wird das Wasser über das Verbindungsrohr 14 in den Laugenbehälter 2 geleitet, wobei im Einspülkasten 11 eingegebenes Waschmittel mit in den Laugenbehälter 2 gespült wird. Unterhalb des Laugenbehälters 2 ist eine Ablaufeinrichtung 12 mit einem Ablassventil oder einer Pumpe 12a angeordnet, die die verbrauchte Waschflüssigkeit oder das Spülwasser aus dem Laugenbehälter 2 zur Ablaufleitung 12c herausführt, die in der Regel in einen Abwasserkanal mündet. Die Steuereinrichtung 18 steuert das Einlassventil 15, die Aktivität der Ablaufeinrichtung 12 den Antriebsmotor 13, der über das Leistungsteil oder einen Frequenzumrichter 16 bestromt wird, und den Heizkörper 7.

In Fig. 1 ist ferner dargestellt, dass in der stirnseitigen Laugenbehälterwand 2a eine Sensorvorrichtung 10 angebracht ist. Die Sensorvorrichtung 10 ist in einer Öffnung 19 der Laugenbehälterwand 2a eingesetzt und dazu eingerichtet, eine Mehrzahl von physikalischen Größen zu erfassen und mittels einer Signalleitung bzw. einem Leitungsstrang 18a der Steuerungseinrichtung 18 zuzuführen. Die Steuereinrichtung 18 führt dann anhand der erfassten physikalischen Größen das vom Benutzer ausgewählte Waschprogramm durch. Das Einlassventil 15 wird beispielsweise in Abhängigkeit des erfassten Wertes des Drucksensors 20 der Sensorvorrichtung 10 von der Steuereinrichtung 18 gesteuert.

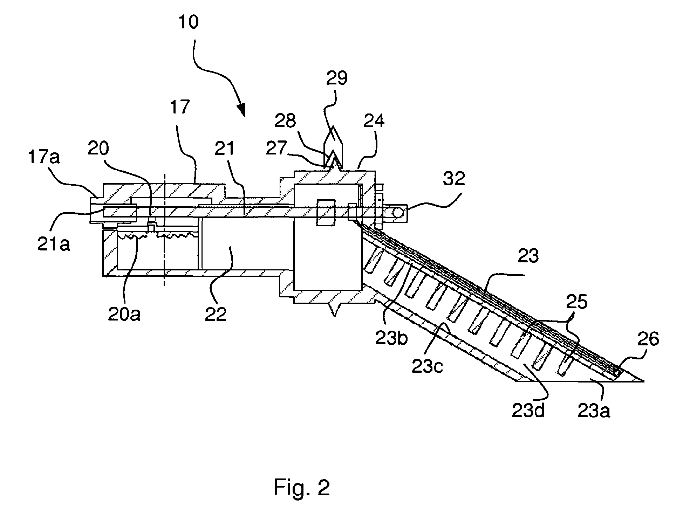

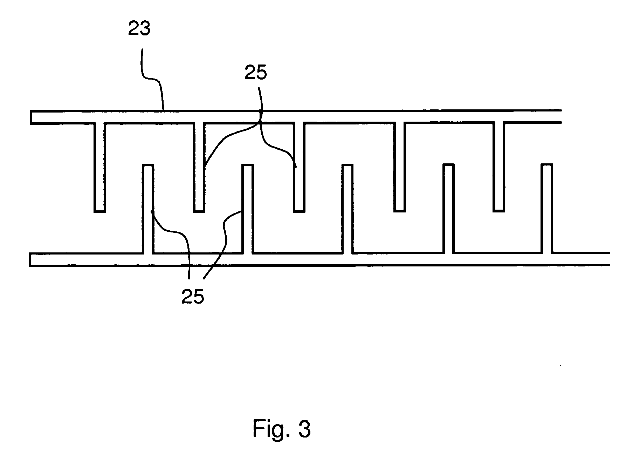

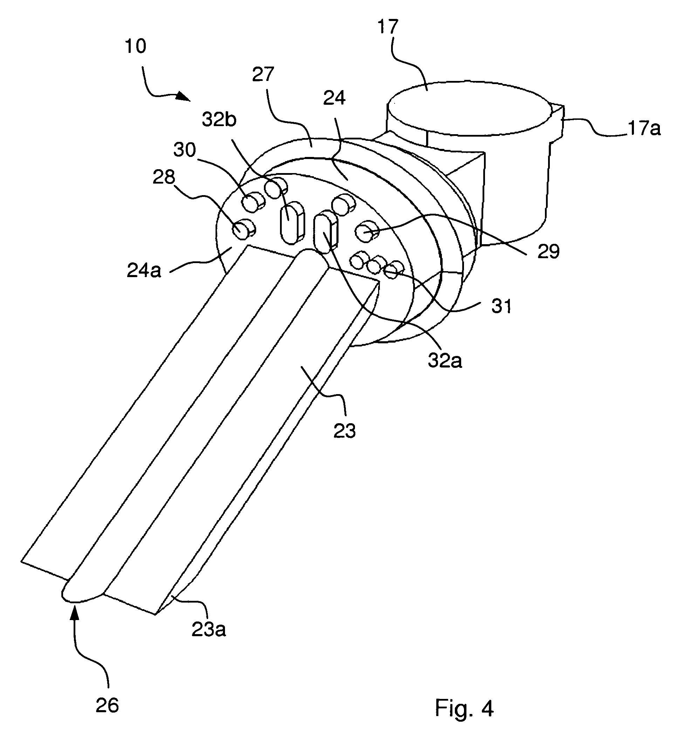

Fig. 2 zeigt die Sensorvorrichtung 10 in einer seitlichen Schnittdarstellung. Das Gehäuse 17 bildet die Aufnahme für eine Leiterplatte 21, die eine elektrische oder elektronische Schaltungsanordnung aufnimmt. Im dargestellten Beispiel stellt die Leiterplatte 21 nur die Leitungsverbindung von den einzelnen Sensoren 20, zur Kontaktstelle 21 a her. In der dargestellten Ausführung bildet das Gehäuse 17 an der oder den Kontaktstellen 21 a die Aufnahme 17a für einen Stecker. Das Gehäuse 17 stellt ferner die Druckkammer 22 für die Ausbildung der sogenannten Luftfalle, um mit Hilfe der Membrane 20a und dem daran in Verbindung stehenden Drucksensor 20 den Wasserpegel im Laugenbehälter 2 zu erfassen. Das Gehäuse 17 umfasst ferner einen Stutzen 24 zur Befestigung der Sensorvorrichtung 10 in der Laugenbehälterwand 2a, wobei von dem Stutzen 24 ausgehend sich eine Röhre 23 erstreckt, die im eingebauten Zustand schräg nach unten in das Innere des Laugenbehälters 2 ragt. Die Röhre 23 besitzt labyrinthartig angeordnete Schottwände 25, um das Eindringen von Wasserspritzern in die Druckkammer 22 zu vermeiden. Hierbei ist es vorteilhaft, dass die Schottwände 25 innenseitig auf der Oberseite 23b der Röhre 23 angebracht sind und unter Bildung eines ungehinderten Durchgangs 23d beabstandet zur Unterseite 23c enden. In Fig. 3 ist die labyrinthartige Anordnung der Schottwände 25 innerhalb der Röhre 23 schematisch dargestellt. Am freien Ende 23a der Röhre 23 ist ein Temperatursensor 26 angebracht. Die Röhre 23 mit dem Temperatursensor 26 ist so gestaltet, dass im Eingebauten Zustand sich das freie Ende 23a mit dem Temperatursensor 26 räumlich nah oberhalb des Heizkörpers 7 befindet. Ferner ist zu erkennen, dass das freie Ende 23a der Röhre 23 zumindest im Wesentlichen waagerecht abgeschnitten ist, sodass keine Berührung mit dem Heizkörper 7 oder der mantelseitigen Laugenbehälterwand 2b stattfindet. In der Schnittdarstellung gemäß Fig. 2 und in der perspektivischen Ansicht gemäß Fig. 4 ist ferner zu erkennen, dass am Stutzen 24 außenseitig eine umlaufende Rippe 27 angeformt ist, die zur Einbindung in einer umlaufenden Nut 28 einer Dichtung 29 am Öffnungsrand 19 der Behälterwand 2a ausgebildet ist. Mit dieser Maßnahme wird die Sensorvorrichtung 10 selbsthaltend in der Öffnung 19 der Laugenbehälterwand 2a platziert.

In der Fig. 4 zu erkennen, dass die stirnseitige Wand 24a des Stutzens 24, die im eingebauten Zustand zu Behälterinneren zugewandt ist, weitere Sensoren 30, 31, zur Erfassung physikalischer oder chemischer Eigenschaften der Flüssigkeit im Laugenbehälter 2 angebracht sind. In dieser Ausführung handelt es sich um eine Elektrode 30 zur Erfassung des Leitwertes, eine Elektrode 31 zur Erfassung des Sauerstoffgehaltes, eine weitere Elektrode 32 zur Sensierung des PH-Wertes und eine weitere Elektrode 33 zur Erfassung der Oberflächenspannung. Ferner bildet eine Lichtquelle, wie LED 34a im Zusammenspiel mit einem lichtempfindlichen Bauteil 34b, wie Fototransistor einen Trübungssensor 34 zur Erfassung der Verschmutzung der Waschflüssigkeit. Die Anordnung und die Anzahl der genannten Sensoren bzw. Elektroden können nahezu beliebig, ja nach gewünschter Ausführung, kombiniert bzw. auch bedarfsweise weggelassen werden.

## Patentansprüche

1. Sensorvorrichtung (10), umfassend
- ein Gehäuse (17),
- einen Drucksensor (20), der dazu eingerichtet ist, in Abhängigkeit des auf den Sensor (20) wirkenden Druckes eines zu messenden Mediums ein Sensorsignal zu erzeugen,
- einen Stutzen (24) zur dichtenden Einbindung des Gehäuses (10) in eine Öffnung (19) in einer Behälterwand (2a) und
- eine auf einer Leiterplatte (21) aufgenommenen elektrischen oder elektronischen Schaltungsanordnung (21) zur Verstärkung, Anpassung oder Übertragung des Sensorsignals, die im Gehäuse (17) aufgenommen ist,
**gekennzeichnet durch**
eine im Gehäuse (17) angeordnete Druckkammer (22), in der der Drucksensor (20) mit dem zu messenden Medium in Wirkverbindung steht und ferner eine Röhre (23), die sich zum Behälterinneren erstreckt, wenn die Sensorvorrichtung (10) in betriebsgemäßer Position in der Behälterwand (2a) eingesetzt ist und eine Luftfalle für den Drucksensor (20) bereitstellt.

2. Sensorvorrichtung (10) nach Anspruch 1,
**dadurch gekennzeichnet**,
der Drucksensor (20) eine Membrane (20a) aufweist, die in Abhängigkeit des auf die Membrane (20a) wirkenden Druckes eines zu messenden Mediums eine Bewegung oder Positionsänderung der Membrane (20a) bewirkt, die mit einem Signalerzeuger zur Erzeugung eines Sensorsignals zusammenwirkt.

3. Sensorvorrichtung (10) nach Anspruch 1 oder 2,
**dadurch gekennzeichnet,**
**dass** die Röhre (23) unter einer Schrägen in Richtung des Behälterbodens (2b) verläuft, wenn die Sensorvorrichtung (10) in betriebsgemäßer Position in der Behälterwand (2a) eingesetzt ist.

4. Sensorvorrichtung (10) nach Anspruch 1 oder 2,
**dadurch gekennzeichnet,**
**dass** der Stutzen (24) eine umlaufende Rippe (27) besitzt, die zur Einbindung in einer umlaufenden Nut (28) einer Dichtung (29) am Öffnungsrand (19) der Behälterwand (2a9 ausgebildet ist.

5. Sensorvorrichtung (10) nach Anspruch 1 oder 2,
**dadurch gekennzeichnet,**
**dass** die Röhre (23) einen in etwa rechteckigen oder rechteckigen Querschnitt aufweist.

6. Sensorvorrichtung (10) nach Anspruch 1 oder 5,
**dadurch gekennzeichnet,**
**dass** der Stutzen (23) in etwa zylinderförmig oder zylinderförmig ist.

7. Sensorvorrichtung (10) nach Anspruch 6,
**dadurch gekennzeichnet,**
**dass** innerhalb der Röhre (23) Schottwände (25) in etwa labyrinthartig angeordnet sind.

8. Sensorvorrichtung (10) nach Anspruch 6 oder 7,
**dadurch gekennzeichnet,**
**dass** die Schottwände (25) an der Oberseite (23b) der Röhre (23) angebunden sind und zur Unterseite (23c) der Röhre hin beabstandet enden.

9. Sensorvorrichtung (10) nach Anspruch 1,
**gekennzeichnet durch**
eine elektrische Anschlussvorrichtung (21 a, 17a) zum Anschluss zumindest einer Signalleitung (18a).

10. Sensorvorrichtung (10) nach Anspruch 9,
**dadurch gekennzeichnet,**
**dass** die Anschlussvorrichtung (21 a, 17a) einen Steckverbinder (17a) umfasst, der als Teil des Gehäuses (17) ausgebildet ist.

11. Sensorvorrichtung (10) nach Anspruch 1 und 9,
**gekennzeichnet durch**
einen Temperatursensor (26), der am freien Ende (23a) der Röhre (23) angebracht ist, der mit der elektronischen Schaltung (21) oder der Anschlussvorrichtung (21 a) mittels einer Leitung in der Röhre (23) verbunden ist.

12. Sensorvorrichtung (10) nach Anspruch 1,
**gekennzeichnet durch**
eine zum Behälterinneren zugewandten Wandung (24a) des Stutzens (24), in der weitere Sensoren (30, 31, 32, 33, 34) zur Erfassung physikalischer oder chemischer Eigenschaften der Flüssigkeit im Laugenbehälter (2) angebracht sind.

13. Sensorvorrichtung (10) nach Anspruch 12,
**dadurch gekennzeichnet,**
**dass** zumindest der weitere Sensor oder die weiteren Sensoren aus einer Elektrode (30) zur Erfassung des Leitwertes und/oder einer Elektrode (32) zur Erfassung des PH-Wertes, und/oder einer Elektrode (33) zur Erfassung der Oberflächenspannung und/oder einer Elektrode (31) zur Erfassung des Sauerstoffgehalts der Flüssigkeit besteht.

14. Sensorvorrichtung (10) nach Anspruch 12,
**dadurch gekennzeichnet,**
**dass** zumindest ein weiter Sensor (34) aus einem Fototransistor (34b) oder einem lichtsensitiven elektronischen Bauteil besteht, das im Zusammenspiel mit einer auf der Wandung angebrachten Lichtquelle (34a) einen Trübungssensor bereitstellt.

15. Waschmaschine (1) mit einem Laugenbehälter (2) zur Aufnahme von Waschflüssigkeit (19) zum Behandeln von Wäsche (8), einer im Laugenbehälter (2) horizontal drehbar gelagerte Trommel (3), einem Motor (13) zum Drehen der Trommel (3), einem Heizkörper (7), einer Wasserzulaufeinrichtung (15), einem Heizkörper (7) und einer Steuereinrichtung (16, 18) zum Steuern des Waschprozesses in Abhängigkeit eines ausgewählten Waschprogramms, einem Drucksensor (20) zur Erfassung des Wasserpegels und Druckschwankungen im Laugenbehälter (2) und einem Temperatursensor (26) zur Erfassung der Wassertemperatur im Laugenbehälter (2), wobei der Drucksensor (20) und der Temperartursensor (26) und/oder weitere Sensoren (30, 31, 32, 33, 34) als kompakte Sensorvorrichtung (10) nach einem der Ansprüche 1 bis 13, die in einer stirnseitigen Behälterwand (2a) eingesetzt ist, ausgebildet ist, wobei die Sensorvorrichtung (10) mittels einer oder mehreren elektrischen Leitungen (18a) mit der Steuereinrichtung (18) verbunden ist.

16. Waschmaschine (1) mit einer nach Anspruch 15,
**gekennzeichnet durch**
eine Dichtung (29) am Öffnungsrand (19) der Behälterwand (2a) des Laugenbehälters (2), die eine umlaufende Nut (28) aufweist zur Einbindung einer am Stutzen (24) des Gehäuses (17) der Sensorvorrichtung (10) angeformten umlaufenden Rippe (27), wobei die Dichtung (29) dazu ausgebildet ist, die Sensorvorrichtung (10) in der Behälteröffnung (19) zu fixieren.

## Claims

1. Sensor device (10), comprising a housing (17), a pressure sensor (20) which is configured to generate a sensor signal on the basis of the pressure of a medium to be measured acting on the sensor (20), a connecting piece (24) for sealingly integrating the housing (10) into an opening (19) in a container wall (2a), and an electrical or electronic circuit arrangement (21) accommodated on a printed circuit board (21) for amplifying, adjusting or transmitting the sensor signal, which circuit arrangement is accommodated in the housing (17), **characterised by** a pressure chamber (22) arranged in the housing (17), in which chamber the pressure sensor (20) is operatively connected to the medium to be measured, and further by a tube (23) which extends to the inside of the container when the sensor device (10) is inserted in an operational position in the container wall (2a) and provides an air trap for the pressure sensor (20).

2. Sensor device (10) according to claim 1, **characterised in that** the pressure sensor (20) comprises a membrane (20a) which moves the membrane (20a) or changes the position thereof on the basis of the pressure of a medium to be measured acting on the membrane (20a), said membrane cooperating with a signal generator to generate a sensor signal.

3. Sensor device (10) according to either claim 1 or claim 2, **characterised in that** the tube (23) extends at a slant in the direction of the container base (2b) when the sensor device (10) is inserted in an operational position in the container wall (2a).

4. Sensor device (10) according to either claim 1 or claim 2, **characterised in that** the connecting piece (24) comprises a circumferential rib (27) which is designed to integrate in a circumferential groove (28) of a seal (29) on the opening edge (19) of the container wall (2a).

5. Sensor device (10) according to either claim 1 or claim 2, **characterised in that** the tube (23) has an approximately rectangular or rectangular cross-section.

6. Sensor device (10) according to either claim 1 or claim 5, **characterised in that** the connecting piece (23) is approximately cylindrical or cylindrical.

7. Sensor device (10) according to claim 6, **characterised in that** bulkhead partitions (25) are arranged inside the tube (23) in an approximately labyrinthine manner.

8. Sensor device (10) according to either claim 6 or claim 7, **characterised in that** the bulkhead partitions (25) are attached to the upper face (23b) of the tube (23) and end at a distance from the lower face (23c) of the tube.

9. Sensor device (10) according to claim 1, **characterised by** an electrical connecting device (21 a, 17a) for connecting at least one signal line (18a).

10. Sensor device (10) according to claim 9, **characterised in that** the connecting device (21a, 17a) comprises a connector (17a) which is designed as a part of the housing (17).

11. Sensor device (10) according to claims 1 and 9, **characterised by** a temperature sensor (26) which is attached to the free end (23a) of the tube (23), and connected to the electronic circuit (21) or to the connecting device (21 a) by means of a line in the tube (23).

12. Sensor device (10) according to claim 1, **characterised by** a wall (24a) of the connecting piece (24) which faces the inside of the container, in which wall additional sensors (30, 31, 32, 33, 34) for detecting physical or chemical properties of the liquid in the suds container (2) are fitted.

13. Sensor device (10) according to claim 12, **characterised in that** at least the additional sensor or the additional sensors consist(s) of an electrode (30) for detecting the conductance and/or an electrode (32) for detecting the PH value and/or an electrode (33) for detecting the surface tension and/or an electrode (31) for detecting the oxygen content of the liquid.

14. Sensor device (10) according to claim 12, **characterised in that** at least one additional sensor (34) consists of a phototransistor (34b) or a light-sensitive electronic component which, in combination with a light source (34a) which is fitted to the wall, provides a turbidity sensor.

15. Washing machine (1) comprising a suds container (2) for receiving washing liquid (19) for treating laundry (8), a drum (3) which is horizontally rotatably mounted in the suds container (2), a motor (13) for rotating the drum (3), a heating member (7), a water supply apparatus (15), a heating member (7) and a control device (16, 18) for controlling the washing process on the basis of a selected washing programme, a pressure sensor (20) for detecting the water level and variations in pressure in the suds container (2), and a temperature sensor (26) for detecting the water temperature in the suds container (2), wherein the pressure sensor (20) and the temperature sensor (26) and/or additional sensors (30, 31, 32, 33, 34) are each designed as a compact sensor device (10), according to any of claims 1 to 13, which is inserted into an end-face container wall (2a), wherein the sensor device (10) is connected to the control device (18) by means of one or more electric lines (18a).

16. Washing machine (1) according to claim 15, **characterised by** a seal (29) at the opening edge (19) of the container wall (2a) of the suds container (2), which seal comprises a circumferential groove (28) for the integration of a circumferential rib (27) which is integrally formed on the connecting piece (24) of the housing (17) of the sensor device (10), the seal (29) being designed to fix the sensor device (10) in the container opening (19).

## Revendications

1. Dispositif de capteur (10), comprenant
- un boîtier (17),
- un capteur de pression (20) qui est aménagé pour produire un signal de capteur en fonction de la pression d'un milieu à mesurer agissant sur le capteur (20),
- une tubulure (24) destinée à engager de façon étanche le boîtier (10) dans un orifice (19) dans une paroi de récipient (2a) et
- une circuiterie (21) électrique ou électronique, logée sur une plaquette de circuit imprimé (21), qui est destinée à amplifier, adapter ou transmettre le signal de capteur et qui est logée dans le boîtier (17),
**caractérisé par**
une chambre de pression (22) disposée dans le boîtier (17) et dans laquelle le capteur de pression (20) est en lien opératoire avec le milieu à mesurer, et également un conduit (23) qui s'étend vers l'intérieur du récipient quand le dispositif de capteur (10) est mis en oeuvre dans une position adaptée au fonctionnement dans la paroi de récipient (2a) et réalise un piège à air pour le capteur de pression (20)

2. Dispositif de capteur (10) selon la revendication 1,
**caractérisé en ce que**
le capteur de pression (20) présente une membrane (20a) qui, en fonction de la pression d'un milieu à mesurer agissant sur la membrane (20a), provoque un mouvement ou un changement de position de la membrane (20a) qui coopère avec un générateur de signaux pour la production d'un signal de capteur.

3. Dispositif de capteur (10) selon la revendication 1 ou 2,
**caractérisé en ce que**
le conduit (23) est disposé de façon oblique vers le fond de récipient (2b) quand le dispositif de capteur (10) est mis en oeuvre dans une position adaptée au fonctionnement dans la paroi de récipient (2a).

4. Dispositif de capteur (10) selon la revendication 1 ou 2,
**caractérisé en ce que**
la tubulure (24) possède une nervure périphérique (27) qui est réalisée pour l'engagement dans une rainure périphérique (28) d'un joint d'étanchéité (29) sur le bord d'orifice (19) de la paroi de récipient (2a).

5. Dispositif de capteur (10) selon la revendication 1 ou 2,
**caractérisé en ce que**
le conduit (23) présente une section transversale rectangulaire ou à peu près rectangulaire.

6. Dispositif de capteur (10) selon la revendication 1 ou 5,
**caractérisé en ce que**
la tubulure (23) est cylindrique ou à peu près cylindrique.

7. Dispositif de capteur (10) selon la revendication 6,
**caractérisé en ce que**,
à l'intérieur du conduit (23), des parois de cloisonnement (25) sont disposées de façon à peu près labyrinthique.

8. Dispositif de capteur (10) selon la revendication 6 ou 7,
**caractérisé en ce que**
les parois de cloisonnement (25) sont attachées sur le côté supérieur (23b) du conduit (23) et se terminent à distance du côté inférieur (23c) du conduit.

9. Dispositif de capteur (10) selon la revendication 1,
**caractérisé par**
un dispositif de connexion (21a, 17a) électrique pour la connexion d'au moins une ligne de signalisation (18a).

10. Dispositif de capteur (10) selon la revendication 9,
**caractérisé en ce que**
le dispositif de connexion (21 a, 17a) comprend un connecteur (17a) qui est réalisé en tant que partie du boîtier (17).

11. Dispositif de capteur (10) selon la revendication 1 ou 9,
**caractérisé par**
un capteur de température (26) qui est mis en place sur l'extrémité libre (23a) du conduit (23) et qui est raccordé au circuit électronique (21) ou au dispositif de connexion (21 a) au moyen d'une ligne dans le conduit (23).

12. Dispositif de capteur (10) selon la revendication 1,
**caractérisé par**
une cloison (24a) de tubulure (24) qui est tournée vers l'intérieur du récipient et dans laquelle d'autres capteurs (30, 31, 32, 33, 34) sont mis en place pour la saisie de caractéristiques physiques ou chimiques du liquide dans la cuve de lessivage (2).

13. Dispositif de capteur (10) selon la revendication 12,
**caractérisé en ce**
**qu'**au moins l'autre capteur ou les autres capteurs sont composés d'une électrode (30) pour la saisie de la conductance et/ou d'une électrode (32) pour la saisie du pH, et/ou d'une électrode (33) pour la saisie de la tension superficielle et/ou d'une électrode (31) pour la saisie de la teneur en oxygène du liquide.

14. Dispositif de capteur (10) selon la revendication 12,
**caractérisé en ce**
**qu'**au moins un autre capteur (34) se compose d'un phototransistor (34b) ou d'un composant électronique sensible à la lumière qui, en interaction avec une source de lumière (34a) mise en place sur la paroi, réalise un capteur de turbidité.

15. Machine à laver (1) avec une cuve de lessivage (2) destinée à recevoir du liquide de lavage (19) pour le traitement du linge (8), un tambour (3) supporté en rotation horizontalement dans la cuve de lessivage (2), un moteur (13) pour la mise en rotation du tambour (3), un corps chauffant (7), un dispositif d'alimentation en eau (15), un corps chauffant (7) et un dispositif de commande (16, 18) pour la commande du processus de lavage en fonction d'un programme de lavage sélectionné, un capteur de pression (20) pour la saisie du niveau d'eau et des variations de pression dans la cuve de lessivage (2) et un capteur de température (26) pour la saisie de la température de l'eau dans la cuve de lessivage (2), le capteur de pression (20) et le capteur de température (26) et/ou d'autres capteurs (30, 31, 32, 33, 34) étant réalisés en tant que dispositif de capteur (10) compact selon une des revendications 1 à 13 qui est mis en oeuvre dans une paroi de récipient (2a) côté frontal, le dispositif de capteur (10) étant raccordé au dispositif de commande (18) au moyen d'une ou de plusieurs lignes (18) électriques.

16. Machine à laver selon la revendication 15,
**caractérisée par**
un joint d'étanchéité (29) sur le bord d'orifice (19) de la paroi de récipient (2a) de la cuve de lessivage (2), qui présente une rainure périphérique (28) pour l'engagement d'une nervure (27) périphérique formée intégralement sur la tubulure (24) du boîtier (17) du dispositif de capteur (10), le joint d'étanchéité (29) étant réalisé pour fixer le dispositif de capteur (10) dans l'orifice de récipient (19).
